# EUROPEAN PATENT APPLICATION

(11) **EP 3 082 079 A1**
(43) Date of publication of application: **19.10.2016**
(21) Application number: 16164938.9
(22) Date of filing: 12.04.2016
(51) Int. Cl.: G06Q 10/04

(54) **METHOD AND SYSTEM FOR IDENTIFYING NAVAL CONFIGURATIONS THROUGH EVALUATION OF OPERATIONAL AND DESIGN PARAMETERS**

(30) Priority: 17.04.2015 IT GE20150049
(71) Applicant: Orizzonte Sistemi Navali S.p.A., 16129 Genova (IT)
(72) Inventor: PERRA, Francesco, 16142 Genova (IT); GUAGNANO, Aldo, 15067 Novi Ligure (IT); TADDEI, Francesco, 16123 Genova (IT)
(74) Representative: Porsia, Attilio

(57) **Abstract**

A method for identifying naval configurations through evaluation of operational and design parameters, comprising the following steps:
S1) Identification of the parameters or operational needs that the ship must meet;
S2) Configuration of the operating scenario(s) in which the ship will operate, by assigning and/or changing physical parameters and other attribute of the ship;
S3) Definition of the design parameters subjected to simulation based on the results of the previous scenario configuration step;
S4) Execution of simulation campaigns and obtaining data regarding the effectiveness of several naval configurations in the previously defined scenario;
S5) Analysis of the results of the simulation campaigns in terms of operational effectiveness with respect to each configuration set of design parameters;
S6) Statistical analysis of the results and possible definition of surrogate models of naval configurations and obtaining data to be used for the next step of critical analysis of the parameters of the configurations;
S7) Combination of the results of steps S5) and S6) and identification of any critical design parameters;
S8) Definition of possible alternative naval configurations;
S9) Performance analysis of said previously identified naval configurations;
S10) Comparative analysis of the previously identified and analysed naval configurations.

## Description

The present invention relates to a method for identifying naval configurations, for example military ships, in particular through the evaluation of operational and design parameters, and a system implementing this method.

The construction of a ship is intrinsically characterized by high complexity, which increases particularly in the case of innovative designs for military ships. The numerous physical, design and budget constraints, as well as the large number of different technologies involved, all contribute to increasing the complexity of this type of construction.

These complexities are usually managed with iterative approaches, the aim of which is to find the right balance in terms of design characteristics and ensuring that the operating needs defined at the beginning of the project are met.

This iterative process is particularly expensive in terms of time and costs and does not necessarily ensure defining the most appropriate naval configuration. In fact, the operating requirements, which are established in the very early stages of project development when not a lot of information is available, have significant implications on costs and certain design features that, taken as a whole, can impact certain aspects of the expected performance.

The traditional process of development and construction of a new naval unit, in particular a military ship, is characterized by two quite distinct stages: the first stage consists in identifying the scenarios and naval missions that the naval unit must perform, while the second concerns analysing the physical constraints of feasibility, the technologies available and costs.

Typically, the operating needs are analysed in the very early stages of the project by experts from the Italian Navy who deal with issues regarding so-called "naval policy". These experts have the task of defining the operating environments in which the new naval unit will be required to operate: this initial activity includes defining the scenario, characterized, for example, in terms of geographical areas and environmentally sensitive areas. This analysis represents a starting point for defining the first set of operating requirements for the new naval unit in terms of technical capabilities and other salient requirements, such as, for example, the (maximum and/or endurance) speed, operating range and mission duration, which serve as the starting point for the subsequent stages of the design process.

Each stage is therefore differentiated by players with different know-how and skills: while officers expert in military tactics and strategy, together with personnel having a good knowledge of the technical and performance specifications of the ship's systems, take part in the analysis of the operational functions, design experts take part in the feasibility study with the task of harmonizing the requirements and identifying a solution that is viable and, at the same time, meets all the requirements.

The viewpoints of the main parties involved in the project (operational and industrial) do not evolve in the same way during project development, but, on the contrary, communications between them mainly takes place through operating requirements, which do not always take into account the technical feasibility and cost of the unit to be developed. This fact can lead to design problems, due to too stringent requirements or erroneous initial evaluations, this resulting in delays or cost increases, as well as the development of solutions with unsatisfactory performance.

Currently, when the shipbuilder becomes involved, traditional flow-control methods, possibly limited to preliminary assessments, are used for defining the requirements that the naval unit must meet.

In the typical spiral design methodology, different assumptions are first postulated, then analysed and possibly modified, in the hope that they converge in the next cycle of the process spiral.

In order to compare different solutions in an acquisition feasibility stage, this path can be limited to a "first turn" of the spiral, which in any case is expensive in terms of time and costs and cannot always be used effectively in the so-called early-stage design, due to physiological limitations in terms of knowledge of the details and certainties concerning the boundary conditions.

Furthermore, operating requirements are often derived on the basis of empirical knowledge, experience or approximative evaluations and their definition not only fails to take feasibility and cost constraints into account, but often is not even supported by tools that allow assessing operational effectiveness. In fact, until now, tools that allow quantifying the impact of different design choices or alternative usage logic on operational effectiveness have not been exploited.

Currently, both the Italian Navy and the shipbuilding industry have simulation environments able to estimate the operational capabilities of naval units, exclusively for the tactical planning stage of operational missions and for the requirements assessment stage of the subsystems taken on board; whereas no models intended for evaluating the operational capabilities as a whole exist.

One object of the present invention is therefore to provide a method for identifying naval configurations through the evaluation of operational and design parameters that is able to integrate the naval design world with that of operations, right from the very first stages of project development of a new naval unit, defining a data and information interchange network between different software platforms or applications, which are integrated together into a single, functional and logically organized global environment.

A further object of the present invention is to create a method for identifying naval configurations that enables automatically and instantaneously checking what the consequences are of certain design choices (for example, a different propulsion apparatus, or a different subsystem of the combat system, if dealing with a military ship) on the cost and on the overall capability of the naval unit to carry out a certain operational task assigned to it (for example, different naval tasks in different environmental contexts).

A further object of the present invention is to provide a method for identifying naval configurations that allow identifying the correct balance between expectations, specifically of the operating requirements drafting stage, the actual technical feasibility and the resultant cost of the ship, investigating how a change in an operating requirement, in a usage logic or design characteristic, affects all the other factors connected to it, in order to allow trade-off studies of the cost-performance type of ship configurations technically implementable according to the principles of naval architecture.

A further object of the present invention is to provide a system implementing the method for identifying completed naval configurations through the evaluation of operational and design parameters.

These and other objects are achieved by the present invention by means of a method for identifying naval configurations through evaluation of operational and design parameters as claimed in claim 1. Further advantageous characteristics are the subject of the dependent claims.

According to a first aspect of the present invention, a method for identifying naval configurations through the evaluation of operational and design parameters comprises the following sequential steps:
S1) Identification of the parameters or operational needs that the ship must meet;
S2) Configuration of the operating scenario(s) in which the ship will operate by identifying the physical parameters and other attribute of the ship;
S3) Definition of the design parameters, intended as the design parameters of the naval unit, the other entities in the scenario and environmental entities subject to simulation based on the results of the previous scenario configuration step;
S4) Execution of simulation campaigns and obtaining data regarding the effectiveness of several naval configurations in the previously defined scenario;
S5) Analysis of the results of the simulation campaigns in terms of operational effectiveness with respect to each configuration set of design parameters;
S6) Statistical analysis of the results and possible definition of surrogate models of naval configurations and obtaining data to be used for the next step of critical analysis of the parameters of the configurations;
S7) Combination of the results of steps S5) and S6) and identification of any critical design parameters;
S8) Definition of possible alternative naval configurations;
S9) Performance analysis of said previously identified naval configurations;
S10) Comparative analysis of the previously identified and analysed naval configurations.

Advantageously, through the evaluation of operational and design parameters, this method for identifying naval configurations enables integrating the naval design world with that of operations, right from the very first stages of project development of a new naval unit, also defining a data and information interchange network between different software applications, which are integrated together into a single, functional and logically organized environment. At the end of the method's various implementation steps it will be possible to ultimately obtain a series of possible naval unit configurations, from which to choose the one that effectively meets the requested requirements and that satisfies both the economic and design constraints, all within a single environment supported by a normal data processor.

According to a one aspect of the invention, at the end of step S5, this method comprises a step for checking operational effectiveness and possible redefinition of the design parameters according to step S3.

According to a further aspect of the invention, at the end of step S7, it comprises a step for checking surrogate models and possible reconfiguration of the operating scenario(s) according to step S2.

According to another characteristic of the invention, at the end of step S9, it comprises a step for checking the technical feasibility of a given naval configuration and the possible redefinition of possible alternative naval configurations according to step S8.

A further object of the present invention is a system implementing the method for identifying naval configurations.

This system implementing the method for identifying naval configurations enables integrating several software platforms or applications, which deal with evaluating the alternative configurations from different viewpoints. The main modules of the system are the Operational Evaluation Model (OEM), the function of which is to estimate the degree of operational effectiveness of a ship configuration in one or more scenarios; the Ship Synthesis Model (SSM), which has the aim of evaluating the soundness of the ship configuration according to the principles of naval architecture; and the module known as the Dashboard (D), which enables interfacing data, integrating the two models OEM and SSM and performing trade-off analysis, by acting as a kind of control panel on which the user can operate, modifying certain parameters and analysing the results obtained, in terms of operational performance, feasibility and cost, in real time.

Steps S1 to S7 of this method can be accomplished by means of the OEM module, steps S8 and S9 by means of the SSM module and step S10 by means of the Dashboard D.

The Ship Synthesis Model (SSM) platform is a tool conceived for supporting the preliminary design stages of a naval combat unit. In practice, it consists of a logical sequence of parametric formulae, derived from the statistical analysis of existing ships, which enables rapidly and automatically evaluating the technical sustainability of a design.

It is structured in a number of modules ordered in a logical and sequential manner, which corresponds to a "turn" of the so-called design spiral. Each evaluation performed with the model corresponds to turn of the spiral and, in consequence, cannot necessarily be balanced, as the selection of the input parameters may lead to a technically impracticable solution.

The feasibility of the defined configuration is evaluated at the end of the model, by comparison of the requested and available quantities, in terms of weight, area, volume, electrical power, propulsive power, autonomy and stability. For example, the thrust provided by the submerged part of the hull is estimated via the initially set main dimensions and compared with the sum of all the estimated weights of the ship's apparatuses and systems.

The parametric formulae that form the SSM are based on different existing ships. Use of the SSM is facilitated by a graphical interface, in which the quantities that characterize the configuration can be defined, together with the payload, which can be selected from an external database of arms and electronic systems.

The Operational Evaluation Model (OEM) platform is a tool that performs a basic role in supporting the initial design stage in the development of military vessels, as it enables evaluating the operational effectiveness of the units within specific operational tasks. The OEM achieves this result through the definition of agent-based simulation models, the execution of simulation campaigns and the collection and analysis of the data thus obtained. The OEM enables the user to configure the operating scenarios that it is intended to study, specifying the main physical characteristics of the entities present and the related behavioural logics, together with the environmental boundary conditions. Once the scenarios are defined, the simulation campaigns are carried out, in which the operating scenarios are repeated a large number of times, making changes on each iteration to a few random parameters (such as, for example, the number of neutral entities in a certain area or the initial positions of any threats), so as to produce a sufficient number of experiments from which to obtain an estimated degree of operational effectiveness of the ship configuration considered that is statistically significant. By changing the parameters of the ship configuration or the behavioural logics thereof, it is possible to identify the critical parameters and proceed with the subsequent technical feasibility analysis.

As the number of simulation experiments that it is necessary to perform in order to evaluate every possible ship configuration with every possible behavioural logic and boundary condition is usually excessively high, it is necessary to apply various statistical techniques to reduce computation times. Design of experiment techniques have consequently been inserted into the OEM that enable building so-called "surrogate models", i.e. abstractions of the simulation model that approximate the behaviour, allowing instantaneous evaluation of the operational effectiveness of a ship configuration, without the need to perform hundreds of simulations. This abstraction permits the rapid evaluation of a large number of different alternatives and greatly extends the capabilities of the tool.

The interface or dashboard is the tool that allows interfacing the two main models, namely the SSM application and the OEM application, allowing the user to integrate analysis of the operational effectiveness with the technical feasibility study and with the cost analysis. It is based on the connections between the models, specifically of the innovative process developed by OSN. By means of a graphical interface developed according to the principles of cognitive ergonomics and interaction design, the tool allows analysing how a change in a parameter, whether an operating requirement, a design parameter or a boundary condition, affects the ship as a whole. Furthermore the tool enables analysing a large number of alternatives for which the technical feasibility is "promising"; in particular, the dashboard allows evaluating operational effectiveness and the cost of the alternatives considered, enabling trade-off analysis, with the two-fold aim of identifying the most appropriate operating requirements and tracing the criteria and reasons that led to the definition of these requirements.

From the above it will be evident that the present invention is concerned with a technical solution which is useful to solve the technical problems which are posed during the pre-planning step of the ship product, particularly of a military ship, that is the definition of the technical features of the ship downstream of a process of simulations concerning the operative performances, in front of particular requirements by the buyer.

The present invention is therefore concerned with the ships construction in its main general features, that is the dimensions and the geometrical features, the speed, the autonomy, the payload of the ship already combined in a new feasible manner.

According to the present invention a new and inventive mode is therefore proposed to deal with the project of construction of a military ship.

Further characteristics and advantaged of the present invention will be better understood from the following description, considered by way of non-limitative example and referring to the accompanying drawings, in which:
- Fig. 1 shows a general block diagram indicating the main steps of this method for identifying naval configurations;
- Fig. 2 shows a screen of the OEM platform in which it is possible to define the classes of all the entities included in the operating scenario to be simulated;
- Fig. 3 shows a second screen of the OEM platform where it is possible to define the behaviour of the entities included in the operating scenario to be simulated;
- Fig. 4 shows a third screen of the OEM platform through which it is possible to define or modify the design parameters;
- Fig. 5 shows a screen of the OEM platform related to carrying out simulation campaigns for a certain number of naval units;
- Fig. 6 shows a map through which it is possible to follow the dynamic evolution of the simulations in a given scenario;
- Fig. 7 shows an analysis chart of the results of the simulation campaigns, for the purpose of obtaining a simplified meta-model or surrogate model;
- Fig. 8 shows a further screen of the OEM platform in which any critical design parameters can be identified;
- Fig. 9 shows a screen of the SSM platform in which it is possible to analyse possible alternative naval configurations;
- Fig. 10 shows two graphical performance analysis diagrams of alternative naval configurations, in particular in terms of the ship's sea-keeping and manoeuvrability; and

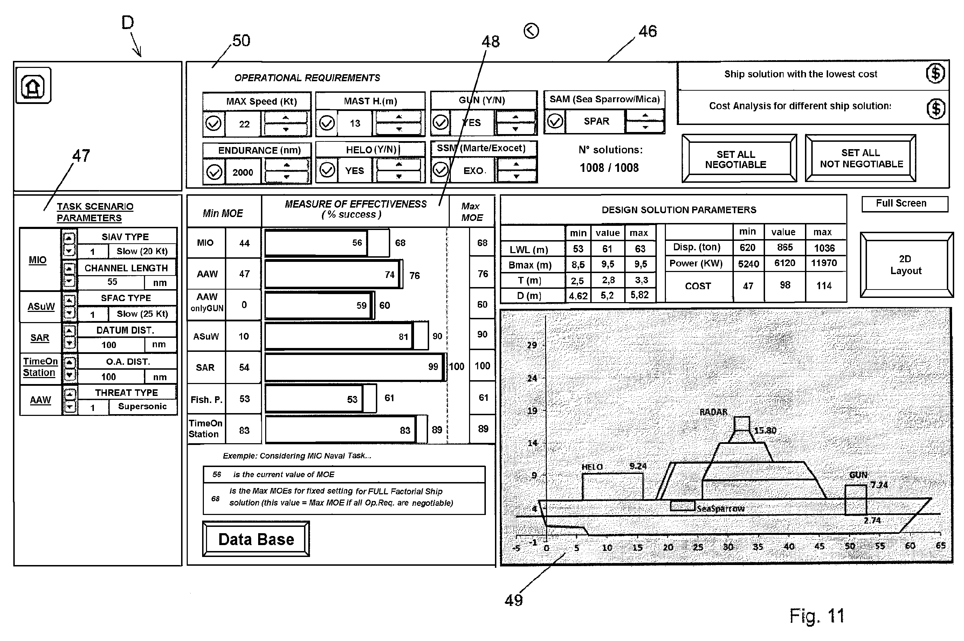

- Fig. 11 shows a screen of the dashboard interface.

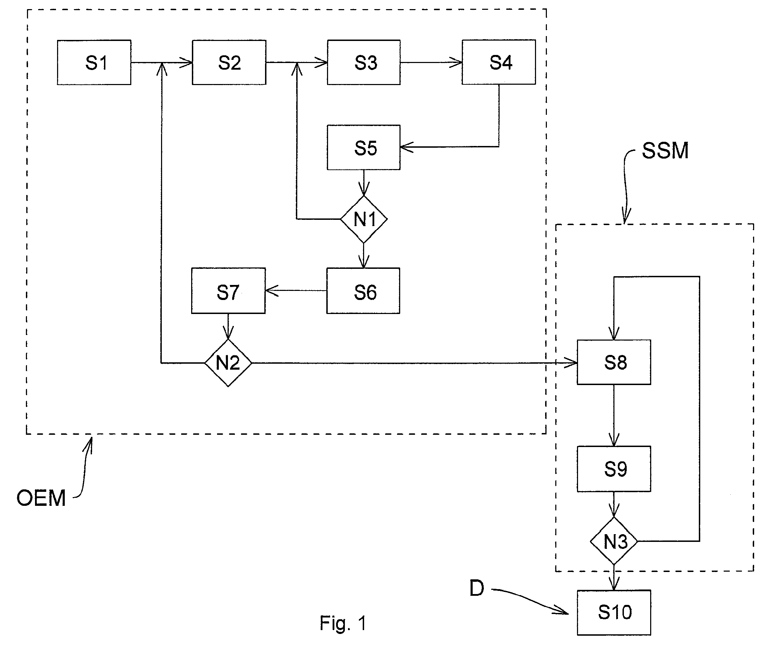

With reference to these accompanying drawings, Fig. 1 shows a general block diagram with the various steps of this method for identifying naval configurations. Steps S1 to S7 are carried out by the Operational Evaluation Model module OEM, steps S8 and S9 by the Ship Synthesis Model module SSM and step S10 by the Dashboard module D. S1 indicates the step of identifying the parameters or operational needs that the ship must meet. After step S1, there is a step S2 for configuration of the operating scenario(s) in which the ship will operate by identifying the physical parameters and other attribute of the ship. After this configuration is completed, there is a step S3 for definition of the design parameters to be simulated, on the basis of the results of the preceding step of scenario configuration. After step S3, there is a step S4 for execution of the simulation campaigns and obtaining data related to the effectiveness of a number of naval configurations in the previously defined scenario. After the simulation campaigns are completed, the results are analysed in terms of operational effectiveness with respect to each configuration set of design parameters in step S5. If satisfactory results are obtained from this analysis, see decision node N1, the method passes to the next step S6 for the definition of surrogate models of the naval configurations, otherwise the method returns to step S3 for definition of the design parameters. In step S6 data is also obtained for the successive step S7 for validation of the models. Basically, in this step the results of the previous steps S5 and S6 are combined and it is checked if there are any critical parameters, node N2. If critical parameters are identified, the method recommences from step S2, while if the models are validated, the method continues to the next step S8. The possible alternative naval configurations are defined in step S8 and performance analysis is carried out in step S9. If these configurations are found to be feasible, node N3, the method passes to the final step S10 of selecting configurations, also on the basis of cost and performance evaluations, while if these configurations are no feasible, the method returns to step S8.

The operating steps of this method will now be considered in detail. The purpose of step S1 is to define the operational needs that the naval unit must satisfy. These operational needs can comprise the naval missions that the unit must carry out, together with a brief description of the operating environments in which the ship will operate. An example of this type of need could be that of "patrolling several coastal areas and carrying out naval interdiction missions against asymmetrical threats", or "renovate an existing but close to be decommissioned system by extending its capabilities based on more recent technologies". As can be seen from the examples, it is important to note that these operational needs are preferably expressed in the most generic manner possible and not constrained by any type of solution: being able to express these needs without at the same time describing a solution that meets them is conceptually more difficult, but the effort is repaid in the subsequent steps of the method, as more possibilities are left open and analysis is not limited to just a small subset of possible solutions. In other words, if the operational needs are expressed generically, it is possible to assume many more mutually different alternatives in the early stages of project development, and to individually estimate the soundness and associated cost. In this way, the risk of restricting project development to a specific solution, which might not necessarily be the best one to implement, is reduced.

As the first step of this process or method, the description of these operational needs is fundamental, because it is necessary to develop the successive steps correctly: in fact, once analysed and traced in functional and implementation requirements, the high-level operational needs will enable guiding all the successive steps of project development.

The way in which this process of defining the operational needs is carried out may vary according to the project in question, but is always performed taking economic policy assessments of the Italian Navy into consideration.

The output of this step S1 thus comprises a textual description of the set of one or more operational needs that the ship must satisfy, expressed in terms of missions to carry out, operating environment and/or technical or economic constraints. These operational needs will serve to identify the missions that the ship must carry out and translate the output of the economic policy assessments into requirements with which to guide solution development.

The next step S2 serves to determine the operating scenarios and the missions that the ship as a whole must carry out, on the basis of the operational needs identified in the previous process. The description of these scenarios must be made in terms of the entities involved (whether friend, foe or neutral) and the physical environment. Regarding the first, it is necessary to define their main physical and performance characteristics (clearly in an approximative manner, as this is a preliminary step of the project), together with their behavioural logic, i.e. the predetermined routes and/or the tactics and actions to perform in cases where particular events occur.

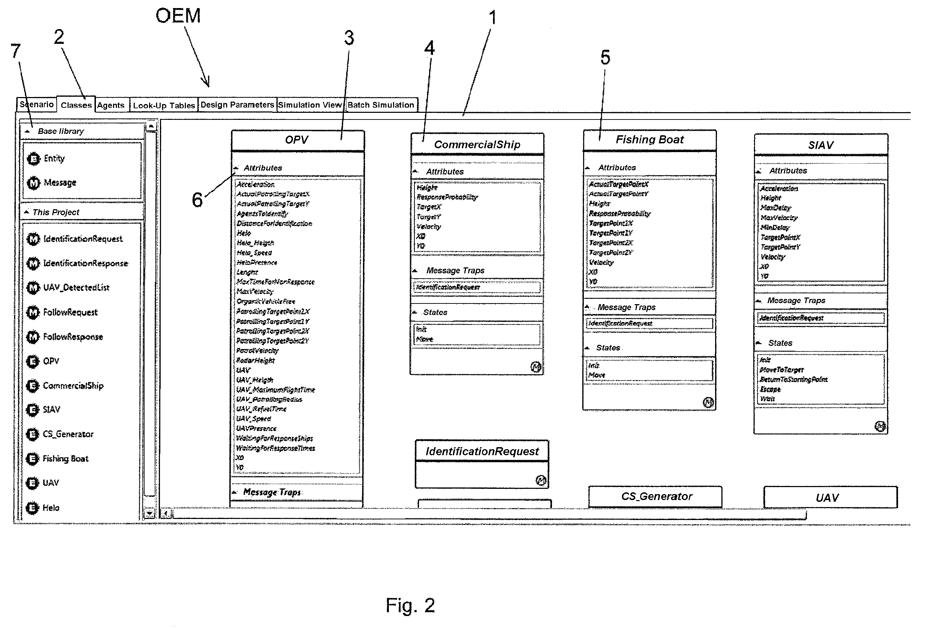

By way of example, Fig. 2 shows a screen 1 of the OEM, in which it is possible to view and modify certain parameters of an operating scenario and the naval classes, see "Classes" tab 2. In this screen it is possible to define the type of ship that is intended to build and obtain a configuration, for example a military patrol boat 3 ("OPV"), or a commercial ship 4 ("CommercialShip"), a fishing boat 5 ("Fishing Boat") and so on. In addition to choosing the naval unit, in this screen it is also possible to modify the physical attributes 6 ("Attributes") with which it is intended to characterize the entities, for example, speed, main dimensions, onboard systems, etc., the messages that each entity in the scenario can exchange with the others, for example, take-off order, identification request, etc., the states in which each entity may find itself during the simulation, for example, patrolling, stationary, in pursuit, etc. The interface of the OEM enables the user to configure any type of scenario and any type of entity and behaviour, from the simplest to the most complex. To facilitate usage, there is a reference library 7, called the "Base Library", from which it is possible to select predetermined configurations.

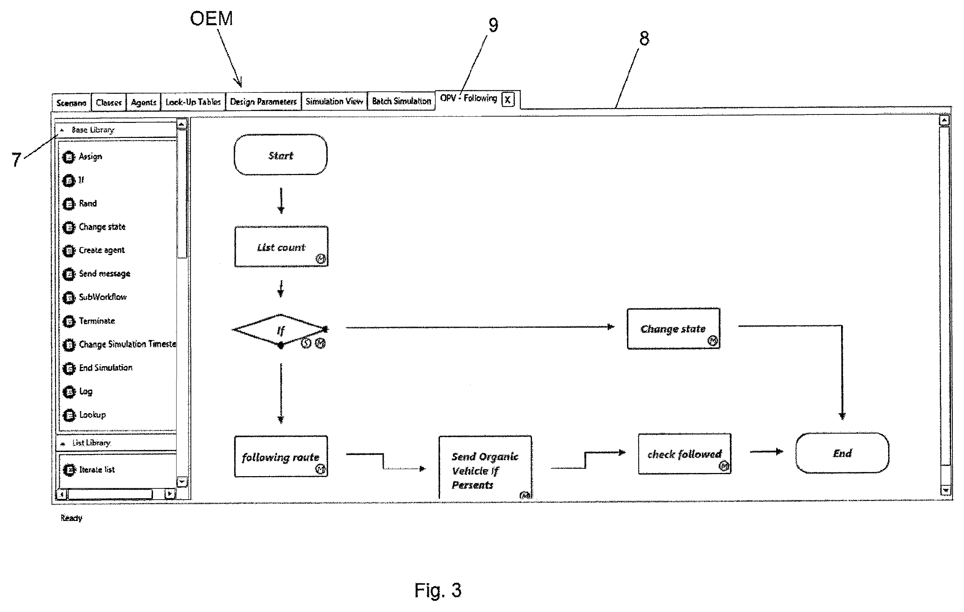

Fig. 3 shows another screen 8 of the OEM, in which it is possible to modify other parameters that describe an operating scenario, for example, in the case where a naval patrol unit OPV has been selected, see "OPV-Following" tab 9. In particular, in this screen it is possible to define and modify the behaviour of the entities in the scenario, describing the conditions that cause the passage from one state to another, and the logical sequences and messages necessary for passing from one condition to another. In this case as well, the interface allows the user to define any type of behaviour, also possibly making use of a library of already defined standard behaviours, see "Base Library" tab 7. This step of identification and description of the operating scenarios is carried out is via the graphical configuration interface of the OEM, but also with support from operational personnel who deal with these types of mission and therefore have the necessary experience for realistically describing the scenarios. The output of this step S2 is formed by the set of models of each scenario that it has been decided to study, in terms of entities (agents), behaviours and environmental conditions.

The purpose of step S3 is to identify those main parameters that it is considered necessary to study for the analysis and comparison with those configurations that will be identified as possible alternatives, always with regard, for example, to a patrol boat OPV. These parameters can be: technical aspects that describe the configuration of the solution, operational aspects that describe its behaviour or environmental aspects that affect its performance. The number of these parameters must not be too high (for example, not more than ten), so as not to make the control of all their iterations, and the possible effects due to changing each one of them, too complex. The parameters that describe configuration of the solution must not be particularly sophisticated, and may also correspond to the usual main parameters that are considered in the preliminary steps of the traditional approach in marine engineering, such as, for example, the speed, autonomy or payload.

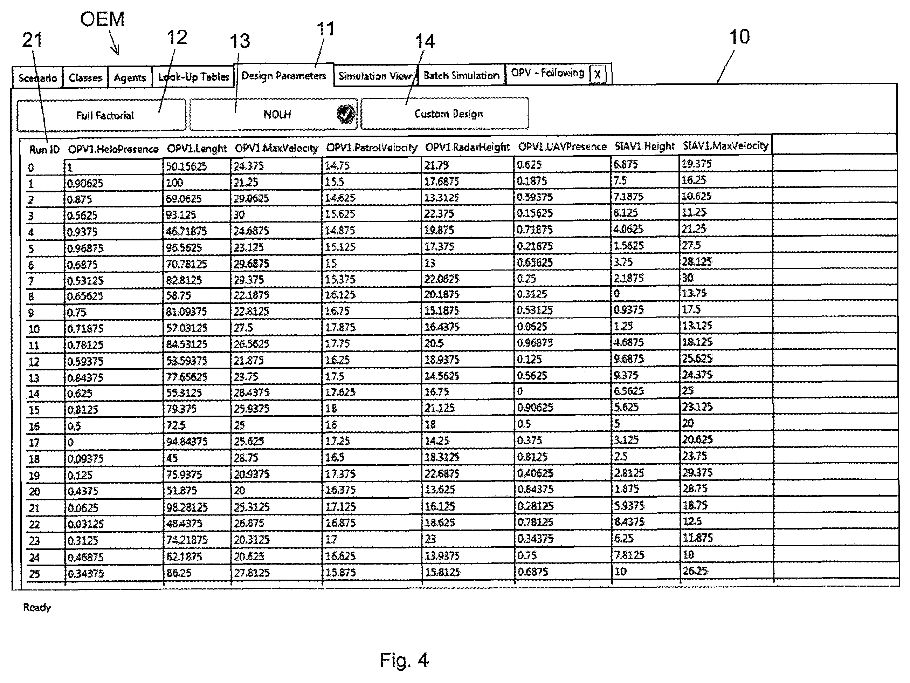

Fig. 4 shows a screen of the OEM that allows defining the set of variables to study in the simulations, which are referred to as design variables (or parameters), see "Design parameters" tab 11, whether for an OPV1 vessel or a SIAV1 vessel; in particular, the design parameters or variables for the OPV include, for example, the length "OPV1 Length", the maximum speed "OPV1MaxVelocity" and so on. In particular, for each of the variables defined in the scenario configuration step, it is possible to define whether it is to be kept fixed in the simulations or if it must change (and in this case, it is necessary to specify the range of values to be considered and the discretization step). Once the desired set of design variables is identified, it is necessary to specify which combinations of these variables it is wished to study, which will finally determine the total time for the simulations. It is possible to define three types of combination via the interface: the first, represented by the "Full Factorial" button 12, consists in considering all the possible combinations of the parameters (and is therefore the most complete, but also the most costly in terms of computation time), the second, represented by the "NOLH" button 13, consists in leaving the definition of the most significant combinations of the design variables to the tool (algorithms that are well known in the literature, such as the Nearly Orthogonal Latin Hypercube, are used for this), while the last one, represented by the "Custom Design" button 14, consists in manually specifying the combinations it is wished to study in the simulations, one by one. The "RunID" header 21 indicates all the naval configurations that will be configured and subsequently simulated, and in this case run from 0 to 25, but the number can obviously be highly variable. This definition process of the design parameters is carried out through iterative analysis of the output deriving from the simulations. One valid approach could be to assume a possible set of design parameters and analyse, through the results of the simulations, the effect each one of them has on the degree of overall effectiveness (so-called sensitivity analysis), and then subsequently reduce the set of parameters to just the most significant ones. The output of this step is therefore the set of design parameters on which to subsequently perform trade-off analysis, together with their permissible variation ranges.

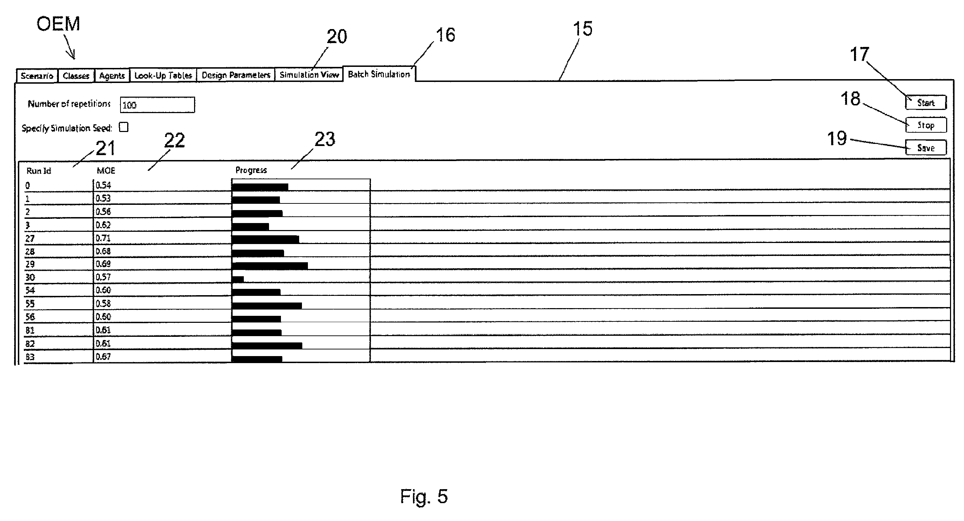

The purpose of step S4 is to execute the simulation campaigns and obtain data that enables evaluating the degree of effectiveness of a ship configuration in each previously defined scenario. To this end, it is necessary to configure the OEM software application, carry out the simulations and collect the results. In this step, it is important to correctly represent the behavioural and environmental dynamics that describe the real development of an operating scenario in the most plausible manner possible. To this end, simplified models are necessary for representing, albeit approximatively, the performance of the system and the other entities present in the scenario, such as, for example, the accelerations, manoeuvring radii or sea-keeping. Fig. 5 shows a screen 15 of the OEM in which it is possible to follow the progress of the simulation; in this case the "Batch Simulation" tab 16 has been selected. There are also three buttons 17, 18 and 19 on the screen that respectively represent the start, stop and saving of simulations. In this case, 83 simulations are being performed, as can be seen under the "Run Id" heading 21. Data regarding the degree of operational effectiveness of a certain configuration defined by a given Run Id is listed in the column under the "MOE" header 22, while bars indicating the progress of the various simulations are indicated under the "Progress" header 23. This screen 15 thus allows simultaneously managing and analysing a large number of simulations. The purpose of this type of usage of the simulator is to test a large number of scenario configurations and collect the data obtained from each one of them. The graphical display of the evolution of the simulated scenarios is possible via a successive screen so as to enable the computer to perform the evaluations in the least possible time. Each of these configurations is tested by repeating the simulation of the scenario a sufficient number of times, so as to obtain valid results from the statistical viewpoint. This usage mode is referred to as a "simulation campaign".

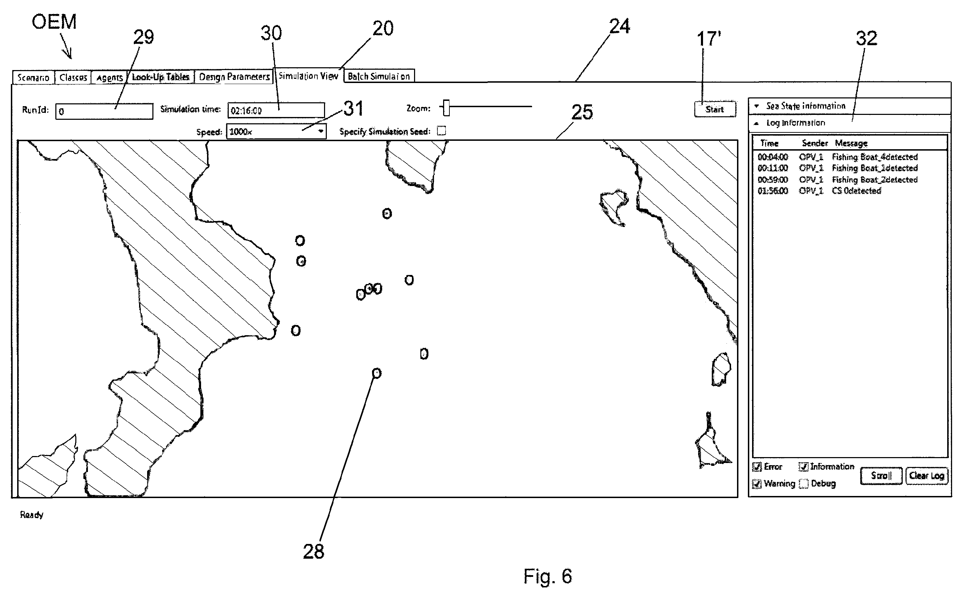

If the "Simulation View" tab 20 is selected, a screen 24 of the OEM will appear displaying the dynamic evolution of a particular scenario, see Fig. 6, for example, a map 25 that represents the region in which the simulation is taking place and which contains the previously defined entities, represented by dots 28 or other symbols. These dots can each have a different colour for identification purposes. These entities 28 move during the simulation, simulating the behaviour defined in the configuration step and interact with each other according to the established behaviour dynamics. After a certain time from the beginning of the simulation or after certain events decided by the user occur (for example, threat neutralization, mission failure, etc.), the simulation terminates and the results are collected for subsequent analysis. In addition, other functions are visible in this screen 24, with which the user can interact via the simulation tool: in particular, the user can select the configuration to display, text box 29, modify the total simulation time, text box 30, and the speed of evolution of the scenario, text box 31, move the portion of the map, and display and read the main events taking place in the simulation, which can be listed in a textual format on the right hand part 32 of the screen.

As mentioned, the output of this step S4 of execution of the simulation campaigns is constituted by the results of the simulations in terms of the degree of operational effectiveness MOE with respect to each specific configuration set of design parameters, and therefore with respect to each Run Id.

The purpose of step S5 is to carry out statistical analysis on the results of the simulations (such as the already mentioned sensitivity analysis), so as to then define, in step S6, the so-called "surrogate models" or "meta-models", i.e. abstractions of the simulation model, which allow instantaneously computing the degree of effectiveness of any configuration of the design parameters. These abstractions are generally used in cases where it is necessary to perform a large number of repetitions of simulation experiments to obtain all of the output required to have significant information from the statistical viewpoint. The analysis of this process enables saving a large part of the computing time necessary for obtaining the expected results, allowing the user of the tool to concentrate attention on the analysis of the results instead of on the progress of the simulation campaigns. It should be noted that surrogate models, in being extensions of the simulation models, are by their nature affected by a certain degree of approximation: their results must thus be taken into consideration in terms of comparison and tendency rather than in absolute terms.

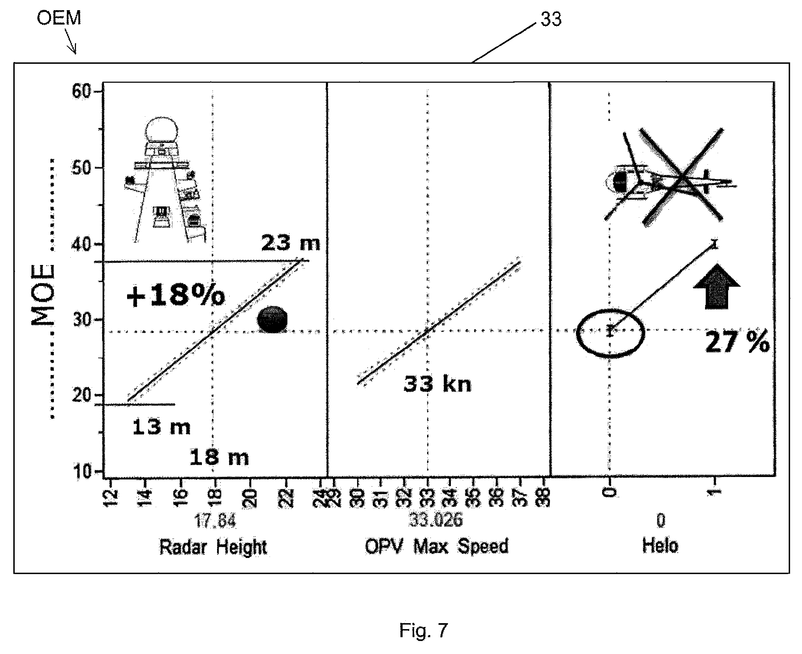

Fig. 7 shows an illustrative screen 33 of the results of statistical analysis on the simulations: in particular, the different impacts, in terms of operational effectiveness in a specific scenario, deriving from the addition of certain systems to a reference unit or naval configuration, are shown. For example, by increasing the height of the radar by 10 metres, there is an 18% increase in terms of MOE effectiveness. If the maximum speed is increased or a helicopter is added to the naval unit, bearing in mind that it always an OPV that is involved, as mentioned at the beginning of the example, then the MOE effectiveness is increased even in these cases. These types of graphical diagrams allow having visual feedback on the estimate of the effect that a design change to the solution has on the overall effectiveness of the ship. By comparing several diagrams of this type, it is possible to establish which design characteristics can be the most critical for the scenario being studied and, in consequence, obtain indications on what might be the most satisfactory solutions. It is important to note that the creation of these types of diagram according to this method can be supported by special statistical programs, which have various functions, including one for creating dynamic graphics.

The meta-models defined thanks to the simulation results, step S6, can be seen as functions that approximate the behaviour of a model, based on a limited (but sufficient) amount of information. By performing a limited number of simulations for specific configurations of input parameters, it is possible to obtain information on the expected results from the model in any other configuration of those parameters. These expected "results" are more intuitive in the case of a limited number of variables; for example; a certain curve in a two-dimensional graph will be obtained with only two variables, but they become very complex in the case of a large number of configuration parameters (which is precisely the case of a military ship project). The advantage of using these meta-models lies in the fact that, once the function that approximates the behaviour of the model has been computed, it is possible to instantaneously calculate the output that would be obtained by carrying out the simulations for any configuration of the input parameters. Therefore, from the viewpoint of computation times, the definition of meta-models is a fundamental step for the process, because it allows evaluating the operational effectiveness of any design alternative in a just a few moments, without having to perform a large number of simulations, as would instead happen if no meta-models were available.

This process of statistical analysis of the results of the simulations is carried out is by means of particularly effective computing tools and suitable commercial tools, supported by analysts skilled in statistics and probability.

The purpose of step S7 is to identify the most relevant design parameters in terms of impact on the degree of operational effectiveness, from which it is possible to derive indications on possible alternative configurations. By combining the output of the simulations in step S5 with the results of statistical analysis in step S6, it is possible to estimate the effect that a certain choice in the configuration of the design parameters has on the degree of effectiveness. It is therefore possible to identify the critical parameters that are of primary importance and for which it is wished to study further. These are also the parameters to supply to the feasibility evaluation model (SSM) for studying their effective implementation feasibility.

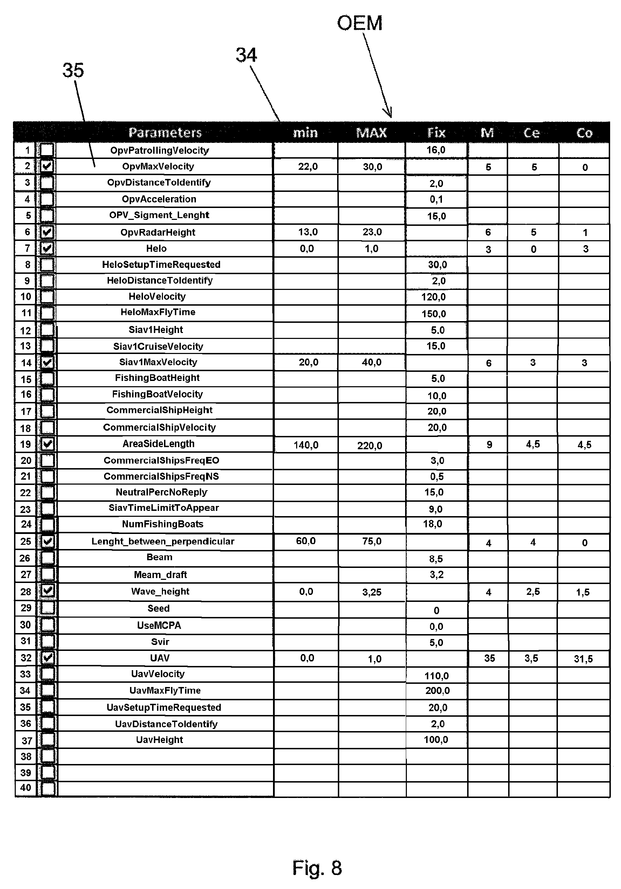

Fig. 8 shows an illustrative screen 34 of this step S7. The parameters 35 marked with a tick correspond to those identified as critical after analysis of the results of the simulations. As can be seen in the figure, the critical parameters may correspond to physical characteristics of the ship, to the systems loaded on board and/or to environmental characteristics of the scenario considered.

This step of identifying the critical design parameters 35 is carried out by starting from the trends identified via technical analysis, opportunely evaluated with the support of operations experts with an appreciation of the subject.

The output of this step is formed by the set of the most significant design parameters, which will serve as input for analysis on the technical feasibility and identification of possible alternative naval configurations.

The purpose of step S8 is primarily that of analysing the technical feasibility of several design alternatives, on the basis of indications provided in the previous steps. Secondly, step S8 enables identifying possible solutions that meet the requirements and are potentially implementable according to the principles of marine engineering. In parallel, the object of this step is also that of discarding those design parameter configurations that result in configurations or units that will be hard to achieve, so as to filter the entire spectrum of all possible solutions. This second aspect is very important, because it enables obtaining precious information on links and connections between the variables in play that are not always visible and therefore enables obtaining information that can be exploited to generate a larger number of feasible solutions.

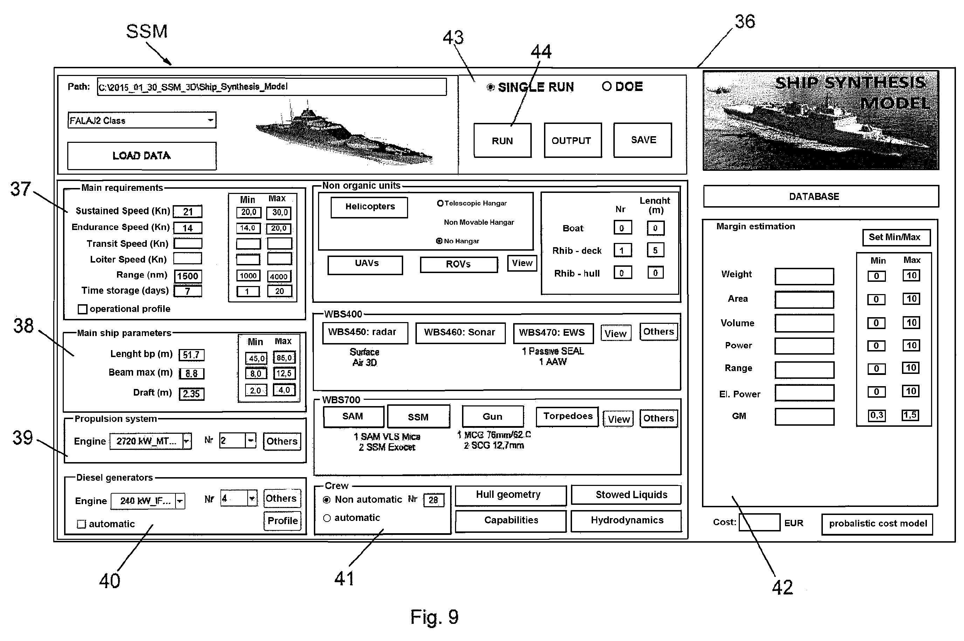

Fig. 9 shows a screen 36 of the SSM for the technical feasibility analysis of a certain naval configuration. Through this interface, the use can configure the main parameters that define a possible design solution and evaluate the soundness from the architectural viewpoint, i.e. evaluate the technical feasibility of this choice of parameters. It is a very efficient process, as it enables obtaining instantaneous responses concerning the technical feasibility of every possible configuration of the design parameters. This process can also be partially automated, leaving the computer to analyse all the possible input parameter combinations, and then filtering those that are not physically acceptable. For example, in the "Main requirements" panel 37 it is possible to set the various speeds of the ship, while in the "Main ship parameters" panel 38 it is possible to set the length of the ship, the draught and the beam, and then the propulsion system in the "Propulsion system" panel 39 and the engine type in the "Diesel generators" panel 40. Other panels include, for example, the "Crew" panel 41 for the number of people forming the crew, the "Margin estimation" panel 42 for the minimum and maximum limits and maximums of certain parameters, and other panels clearly identifiable from the captions displayed. As can be seen from panel 43, once the parameters have been chosen, it is possible to evaluate the feasibility of the naval configuration via the "RUN" button 44. The procedure of this step of analysis of the technical feasibility of possible configurations through the SSM module enables setting the above-described input parameters and others that define a possible ship configuration, and evaluating the soundness of the choice of these parameters. By iterating this procedure and improving the choice of input parameters on each pass, a ship configuration can be achieved that satisfies the feasibility constraints laid down or, alternatively, the conclusion that the chosen set of parameters does not lead to any implementable configuration and therefore of the need to identify an alternative.

The output of this step S8 comprises a set of parameters that define one or more technically feasible naval configurations and, at the same time, meet the previously chosen requirements.

The purpose of the next step S9 is to evaluate certain performance aspects of the previously identified naval configurations, in order to estimate what the real performance might be of the solutions in their operating environment. In particular, the performance aspects evaluated are those in terms of the ship's sea-keeping and in terms of manoeuvrability, fundamental for evaluating behaviour in the operating scenarios.

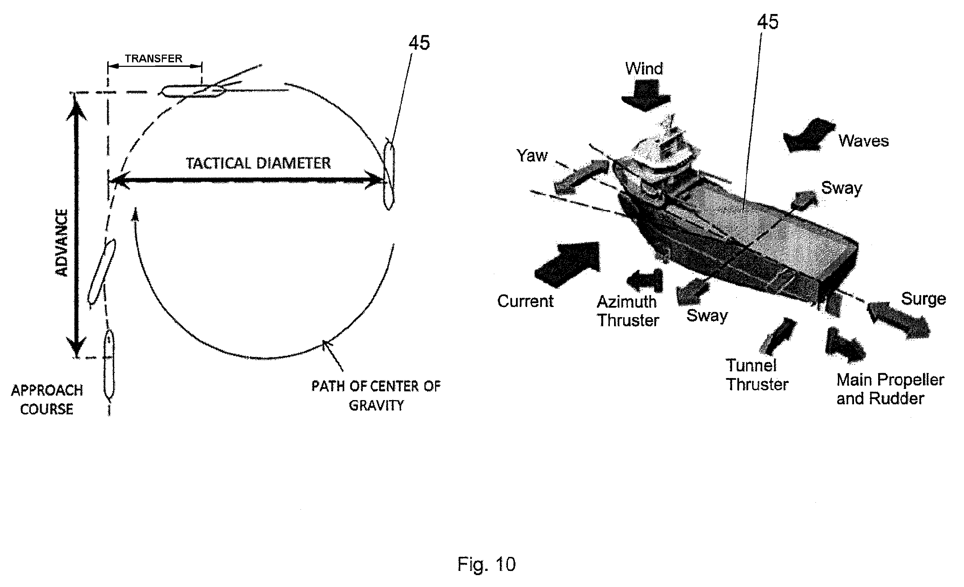

Figure 10 shows a graphical representation of the parameters that describe performance in terms of manoeuvrability of the ship 45 and the seakeeping movements, i.e. the seakeeping capability with high-sea wave states. The estimate of this performance is made difficult due to the scarcity of data available at this stage of project development: in fact, special methods are needed, calibrated for the type of ship being considered and which enable estimating, rapidly and with reasonable precision, the performance of any configuration of the parameters that describe the ship in different operating environments. This information must then be integrated in the simulations of the operating scenarios to have more precise corroboration of the operational effectiveness of the individual configurations. This performance analysis process is carried out by the application of simplified parametric models that enable evaluating the ship's main movements and the quantities that define the ship's manoeuvrability. The terminology used in the captions in Fig. 10 clearly indicates the quantities considered and also the external factors that affect the ship's performance, for example, the wind and the waves.

The output of this step comprises the performance evaluations of the ship configuration identified in the preceding step S8.

Naturally, the cost analysis of the previously identified naval configurations, along their entire life cycle, is another aspect to consider. Cost analysis is fundamental for subsequent trade-off analysis, which would not be very significant without the possibility of performing cost-effectiveness comparisons. Estimation of the costs of a naval unit is very difficult in the preliminary design stages, as little information is available and the possible risks to take into consideration can be numerous. Cost analysis provides for an estimate of the costs of acquiring the ship based on the physical design characteristics, and an estimate of the costs associated with the operating life of the ship, which also depends on the operational use of the unit and, in consequence, suffers from significant uncertainty. This cost analysis process is carried out by using a parametric model that allows assessing the life cycle costs of each alternative naval configuration.

The output of this process consists in the cost assessment of the naval configurations identified in the previous step.

The purpose of the result analysis step S10 is to check that the evaluations made in each of the preceding processes is correct and, if necessary, take action on those that should be improved. Once the soundness of results has been checked, it is possible to proceed with the comparative analysis of the identified solutions, perform cost-effectiveness trade-off analysis, attempt to change some assumptions by studying their effect on the results, modify the design parameters and identify the most promising solutions on which to concentrate further in-depth research.

Figure 14 shows an illustrative Dashboard screen 46 for cost-effectiveness trade-off analysis. The Dashboard is a decision support tool that allows the user to interface with the simulation models, collect the results and carry out comparative analysis. Given that the final objective of this process is that of identifying the candidate solutions that correspond to the operational needs, it is preferable that this step is supported and validated by the person(s) that defined the operational needs in the first steps of the process. As can easily be observed on screen 46, among the panels provided there is a "TASK SCENARIO PARAMETERS" panel 47 for scenario parameters, a "MEASURE OF EFFECTIVENESS" panel 48 for displaying effectiveness values, a panel 49 schematically illustrating a model of ship obtained as a consequence of a series of parameters settings according to the various described steps of this method, an "OPERATIONAL PARAMETERS" panel 50 for operational parameters, and so on. The output of this last step consists in the naval configuration(s) evaluated as being most promising for the subsequent stages of development, together with all the first-approximation data that quantify its soundness and justify the choice.

## Claims

1. A method for identifying naval configurations through evaluation of operational and design parameters, comprising the following steps:
S1) Identification of the parameters or operational needs that the ship must meet;
S2) Configuration of the operating scenario(s) in which the ship will operate, by assigning and/or changing physical parameters and other attributes of the ship;
S3) Definition of the design parameters subjected to simulation based on the results of the previous scenario configuration step;
S4) Execution of simulation campaigns and obtaining data regarding the effectiveness of several naval configurations in the previously defined scenario;
S5) Analysis of the results of the simulation campaigns in terms of operational effectiveness with respect to each configuration set of design parameters;
S6) Statistical analysis of the results and possible definition of surrogate models of naval configurations and obtaining data to be used for the next step of critical analysis of the parameters of the configurations;
S7) Combination of the results of steps S5) and S6) and identification of any critical design parameters;
S8) Definition of possible alternative naval configurations;
S9) Performance analysis of said previously identified naval configurations;
S10) Comparative analysis of the previously identified and analysed naval configurations.

2. A method according to claim 1, **characterized in that** at the end of step S5, it comprises a step (N1) of checking the operational effectiveness and, if necessary, redefinition of the design parameters according to step S3.

3. A method according to claim 1, **characterized in that** at the end of step S7, it comprises a step (N2) of checking the surrogate models and, if necessary, reconfiguration of the operating scenario(s) according to step S2.

4. A method according to claim 1, **characterized in that** at the end of step S9, it comprises a step (N3) of checking the technical feasibility of a given naval configuration and the possible redefinition of possible alternative naval configurations according to step S8.

5. A method according to claim 1, **characterized in that** the output of step S1 comprises a textual description of the set of one or more operational needs that the ship must satisfy, expressed in terms of missions to carry out, operating environment and/or technical or economic constraints.

6. A method according to claim 1, **characterized in that** the classes of naval units to be built are defined and the physical attributes are set and/or modified in step S2, and the output of this step S2 is formed by the set of models of each scenario that it has been decided to study, in terms of entities or agents, behaviours and environmental conditions.

7. A method according to claim 1, **characterized in that** in step S3, once the desired set di design variables is identified, the combinations of these variable it is wished to study are specified, which shall finally determine the total time of the simulations, through the use of several types of combination, of which a first combination that consists of considering all the possible combinations of the parameters, a second combination that consists of considering the most significant combinations of the design variables, exploiting certain algorithms such as the Nearly Orthogonal Latin Hypercube, and a third combination in which each combination it is wished to study in the simulations is specified.

8. A method according to claim 1, **characterized in that** dynamic graphical diagrams are created via which it is possible to analyse the operational effectiveness of a given naval configuration as certain parameters vary, said types of graphical diagrams being supported, if necessary, by specially-provided statistical programs.

9. A method according to claim 1, **characterized in that** the parameters for evaluating the performance of each ship or naval configuration in step S9 comprise sea-keeping and manoeuvrability, said analysis being performed by the application of simplified parametric models that enable the evaluation of the main movements of the ship and of the quantities that define the manoeuvrability of the ship.

10. A system implementing a method for creating naval configurations according to any of the preceding claims, **characterized in that** comprises a first module referred to as the Operational Evaluation Model (OEM), the function of which is to estimate the degree of operational effectiveness of a ship configuration in one or more operating scenarios, a secondo module referred to as the Ship Synthesis Model (SSM), which enables evaluating the soundness of the ship configuration according to the principles of naval architecture; and a third module referred to as the Dashboard (D), which enables interfacing the data and integrating said first and second modules (OEM and SSM).

11. A system according to claim 10, **characterized in that** the first module (OEM) carries out steps S1 to S7 of the method of creating naval configurations.

12. A system according to claim 10, **characterized in that** the second module (SSM) carries out steps S8 and S9 of the method of creating naval configurations.

13. A system according to claim 10, **characterized in that** the third module (D) carries out step S10 of the method of creating naval configurations.
